# EUROPÄISCHE PATENTSCHRIFT

(11) **EP 2 832 573 B1**
(45) Veröffentlichungstag und Bekanntmachung des Hinweises auf die Patenterteilung: **11.09.2019**
(21) Anmeldenummer: 14000936.6
(22) Anmeldetag: 14.03.2014
(51) Int. Cl.: B60K 17/10, B60K 17/356, F16H 61/4192

(54) **Hydrauliksystem mit Drehzahlabsicherung einer Pumpe**
Hydraulic system with pump speed safety system
Système hydraulique avec limiteur de régime de la pompe

(30) Priorität: 03.08.2013 DE 102013012985
(43) Veröffentlichungstag der Anmeldung: 04.02.2015
(73) Patentinhaber: MAN Truck & Bus SE, 80995 München (DE)
(72) Erfinder: Beierer, Philipp, 85302 Gerolsbach (DE); Linke, Ingo, 82194 Gröbenzell (DE); Resch, Franz, 82299 Türkenfeld (DE)
(74) Vertreter: v. Bezold & Partner Patentanwälte - PartG mbB

(56) Entgegenhaltungen:
- EP-A2- 1 886 861
- DE-B- 1 159 279
- GB-A- 1 180 506

## Beschreibung

Die Erfindung betrifft ein Hydrauliksystem für ein Kraftfahrzeug, vorzugsweise ein Nutzfahrzeug, mit einer Pumpe und zumindest einer Funktionseinrichtung, die über ein Leitungssystem mit der Pumpe fluidisch verbunden ist (siehe EP 1 886 861 A). Hydrauliksysteme für Kraftfahrzeuge mit einer Pumpe und Funktionseinrichtungen, die mit der Pumpe fluidisch verbunden sind, sind in unterschiedlichsten Ausführungsformen im Stand der Technik bekannt. So sind z.B. Nutzfahrzeuge mit hydrostatischem Hilfsantrieb, insbesondere sogenannten Einzelradmotoren, bekannt, die für die Wandlung von mechanischer Energie zu hydraulischer Energie eine Konstantpumpe einsetzen. Dabei ist bei aktiviertem Hilfsantrieb die Drehzahl der Konstantpumpe in einem gleichbleibenden Verhältnis mit der Drehzahl einer Hinterachse des Nutzfahrzeugs gekoppelt. Konstruktionsbedingt ist die erlaubte Drehzahl der Konstantpumpe auf einen maximalen Wert begrenzt. Entsprechend ergibt sich somit eine maximale Fahrgeschwindigkeit, bis zu welcher der hydraulische Hilfsantrieb aktiv eingesetzt werden kann. Die Zu- und Abschaltung des hydrostatischen Hilfsantriebs erfolgt in der Regel über eine schaltbare Kupplung. In der Praxis kann es durch verschiedene Fehlerquellen zu einer unerlaubten Überdrehzahl der Konstantpumpe kommen. Beispielhaft sind folgende Ursachen genannt:
- Fehlfunktion eines Steuerventils (Ventil bleibt z.B. hängen, schaltet nicht, schaltet eigenständig, etc.),
- Funktionsstörung einer schaltbaren Kupplung,
- mechanischer Defekt der Lagerung und/oder Anbindung der Konstantpumpe,
- Software-Fehler in Systemsteuerung,
- Fremdstoffkontamination im Ölkreislauf durch Schmutzeintrag (kann z.B. zu Ventilschaden führen).

Bei Pumpenüberdrehzahl kann es zu einer mechanischen Überlastung der Konstantpumpe kommen. Das Schadensbild reicht dabei von plastischer Verformung bis zum Bruch oder der Zerstörung einzelner Komponenten der Konstantpumpe. Dabei können Partikel (z.B. Kleinteile, Bruchelemente, etc.) entstehen und durch den Ölstrom im gesamten Hydrauliksystem verteilt werden. Folglich ist nicht nur die Pumpe selbst von dem Pumpen-Schaden betroffen, sondern auch mit der Pumpe fluidisch verbundene Funktionseinrichtungen, wie z.B. der hydrostatische Hilfsantrieb. Der Reparaturaufwand eines solchen Schadens, insbesondere verbunden mit den Folgeschäden, ist entsprechend hoch und kostspielig.

Eine Aufgabe der Erfindung ist es, ein Hydrauliksystem für ein Kraftfahrzeug, insbesondere Nutzfahrzeug, zu schaffen, dessen zumindest eine Funktionseinrichtung vor den Auswirkungen eines Schadens an und/oder in einer Pumpe geschützt werden kann.

Diese Aufgabe kann mit den Merkmalen des Hauptanspruchs gelöst werden. Vorteilhafte Weiterbildungen der Erfindung können den Unteransprüchen und der folgenden Beschreibung entnommen werden.

Die Erfindung schafft ein Hydrauliksystem für ein Kraftfahrzeug, vorzugsweise ein Nutzfahrzeug, z.B. einen Lastkraftwagen oder einen Omnibus. Das Hydrauliksystem weist eine zweckmäßig hydraulische Pumpe und eine oder mehrere Funktionseinrichtungen auf, die mit der Pumpe fluidisch verbunden sind, insbesondere von der Pumpe fluidisch antreibbar sind, und zweckmäßig stromabwärts der Pumpe angeordnet sind.

Das Hydrauliksystem zeichnet sich vor allem durch eine Schutzkonfiguration aus, die zum Schützen der Funktionseinrichtung(en) vor der Auswirkung eines Schadens an und/oder in der Pumpe dient. Die Schutzkonfiguration dient insbesondere dazu, die Funktionseinrichtung(en) zumindest weitestgehend vor einer unerwünschten, durch einen Schaden an und/oder in der Pumpe verursachten Partikelkontaminierung (z.B. Bruchteile, Kleinteile, etc.) zu schützen.

Die Schutzkonfiguration ist so ausgeführt, dass sie die Funktionseinrichtung deaktiviert, in einem deaktivierten Zustand blockiert und/oder von der Pumpe fluidisch entkoppelt (z.B. mittels einem Ventilblock, einem Schutzventil, einem Steuerventil, einem Regelventil und/oder einer Zwangstrennung), wenn ein Sicherheitskriterium erfüllt ist, und das Sicherheitskriterium umfasst, dass die Drehzahl der Pumpe eine Grenzdrehzahl erreicht oder überschreitet. Damit sind im Rahmen der Erfindung zweckmäßig auch Ausführungsformen umfasst, in denen das Sicherheitskriterium als erfüllt gilt, wenn der Druck oder Druckgradient stromabwärts der Pumpe einen Grenzdruck oder Grenzdruckgradienten erreicht oder überschreitet; und/oder wenn der Volumenstrom stromabwärts der Pumpe einen Grenzvolumenstrom erreicht oder überschreitet. Dadurch kann die Funktionseinrichtung vor der Auswirkung eines Schadens an und/oder in der Pumpe geschützt werden, der auf eine unzulässige Überdrehzahl der Pumpe zurückgeführt werden kann, die wiederum z.B. aus einem unzulässigen Überdruck, Überdruckgradienten und/oder Übervolumenstrom herleitbar ist. Die Erfassung, mittels eines geeigneten Erfassungsmittels, des Drucks, Druckgradientens und/oder Volumenstroms kann somit zweckmäßig quasi als Erfassungsgröße dienen, um eine insbesondere unzulässige Überdrehzahl der Pumpe zu erfassen oder auf eine solche schließen zu können.

Es ist möglich, dass die Schutzkonfiguration eine Erfassungseinheit zur Erfassung der Drehzahl der Pumpe und eine elektronische Steuereinheit zum Durchführen eines Vergleichs zwischen der erfassten Drehzahl der Pumpe und einer Grenzdrehzahl aufweist, auf Basis dessen die Schutzfunktion zweckmäßig aktiviert werden kann.

Die Erfassungseinheit und die elektronische Steuereinheit können z.B. über eine elektrische Leitung mittels elektrischen Signalen miteinander wirkverbunden sein. Bei Überschreiten einer Grenzdrehzahl kann somit ein Signal mit übergeordneter Priorität an die elektronische Steuereinheit gesendet werden, woraufhin die Funktionseinrichtung deaktiviert werden kann, in einem deaktivierten Zustand blockiert werden kann und/oder von der Pumpe fluidisch entkoppelt werden kann.

Es ist möglich, dass die Erfassungseinheit die Drehzahl der Pumpe an der Pumpenwelle erfasst und/oder zumindest teilweise an der Pumpenwelle montiert ist. Die Erfassungseinheit kann z.B. einen an der Pumpenwelle montierten Drehzahlsignalgeber und ein dazugehöriges elektronisches Sensorelement umfassen.

Es ist möglich, dass die Erfassungseinheit so konfiguriert ist, dass sie die Drehzahl der Pumpe kontinuierlich erfasst und/oder kontinuierlich an die elektronische Steuereinheit kommuniziert.

Die Schutzkonfiguration kann ferner eine Steuer- und/oder Erfassungsvorrichtung umfassen, die z.B. stromabwärts der Pumpe angeordnet ist und dazu dient, den Druck, Druckgradienten und/oder den Volumenstrom zweckmäßig stromabwärts der Pumpe zu erfassen, um zweckmäßig hieraus auf die zuvor genannte Grenzdrehzahl oder allgemein eine Überdrehzahl der Pumpe schließen zu können. Der Druck, der Druckgradient und/oder der Volumenstrom können z.B. mechanisch und/oder elektronisch erfasst werden. Die erfassten Werte werden vorzugsweise an die zuvor erwähnte elektronische Steuereinheit kommuniziert.

Die Schutzkonfiguration kann ferner so ausgeführt sein, dass sie z.B. mittels eines Aktuators nach Erfüllung des Sicherheitskriteriums insbesondere direkt auf eine zweckmäßig hydraulische Steuereinheit (vorzugsweise ein Ventilblock, z.B. mit einem oder mehreren Steuer- und/oder Regelventilen) wirkt.

Die zweckmäßig hydraulische Steuereinheit sorgt dafür, die Funktionseinrichtung zu deaktivieren, im deaktivierten Zustand zu blockieren und/oder von der Pumpe fluidisch zu entkoppeln.

Die z.B. hydraulische Steuereinheit ist vorzugsweise fluidisch zwischen der Pumpe und der Funktionseinrichtung angeordnet.

Die Schutzkonfiguration kann ferner so ausgeführt sein, dass sie nach Erfüllung des Sicherheitskriteriums ein elektrisches Signal an eine zweckmäßig elektronische Steuereinheit übermittelt. Die elektronische Steuereinheit ist z.B. so ausgeführt ist, dass sie über ein vorzugsweise pneumatisches Steuerventil und/oder eine z.B. pneumatisch betätigbare Vorsteuereinheit mit der zweckmäßig hydraulischen Steuereinheit (z.B. Ventilblock) kommuniziert. Die Schutzkonfiguration kann ferner ein Schalt- oder Steuerelement (z.B. ein vorzugsweise pneumatisches Steuerventil) aufweisen, das von der elektronischen Steuereinheit ansteuerbar ist und das mit der zumindest einen Funktionseinrichtung, insbesondere dessen Steuereinheit und/oder Vorsteuereinheit, vorzugsweise pneumatisch wirkverbunden ist. Auf die Betätigung des Schalt- oder Steuerelements hin kann zweckmäßig die Funktionseinrichtung deaktiviert werden, in einem deaktivierten Zustand blockiert werden und/oder von der Pumpe fluidisch entkoppelt werden.

Es ist möglich, dass die zumindest eine Funktionseinrichtung als z.B. hydrostatischer Hilfsantrieb, vorzugsweise für eine Vorderachse, Nachlaufachse und/oder Vorlaufachse des Kraftfahrzeugs, ausgeführt ist. Der hydrostatische Hilfsantrieb umfasst vorzugsweise Einzelradmotoren oder ist so ausgeführt, dass er über eine mechanische Antriebswelle zumindest zwei Fahrzeugräder antreibt.

Es ist möglich, dass die Funktionseinrichtung zweckmäßig zumindest einen hydraulischen Kreislauf, insbesondere einen Speisekreis mit zumindest einer Speisepumpe, einem Sicherheitsventil, einem Ölbehälter und/oder einem Wärmetauscher umfasst. Die zumindest eine Funktionseinrichtung kann folglich z. B. ebenso eine Speisepumpe, Schutzventil, Ölbehälter und/oder Wärmetauscher umfassen. So kann die Funktionseinrichtung z.B. einen den Hilfsantrieb umfassenden Kreislauf und optional zumindest einen zusätzlichen Kreislauf umfassen.

Ferner kann die Funktionseinrichtung die hydraulische Steuereinheit und optional eine Vorsteuereinheit umfassen.

Es ist möglich, dass die Schutzkonfiguration so ausgeführt ist, dass sie eine Information an eine Mitteilungseinheit (z.B. ein Display, einen Lautsprecher, etc.) des Kraftfahrzeugs sendet und die Mitteilungseinheit den Fahrer des Kraftfahrzeugs darüber informiert, dass die Funktionseinrichtung deaktiviert ist, im deaktivierten Zustand blockiert wird und/oder von der Pumpe entkoppelt ist.

Die Pumpe ist vorzugsweise als Konstant-Pumpe, insbesondere Hochdruck-Konstant-Pumpe z.B. mit oder ohne manuell adaptierbarem Schluckvolumen ausgeführt. Die Konstant-Pumpe weist zweckmäßig ein im Betrieb konstantes Verdrängervolumen auf.

Alternativ dazu ist auch denkbar, dass die Pumpe als Verstell-Pumpe, insbesondere Hochdruck-Verstell-Pumpe ausgeführt ist. Die Verstell-Pumpe weist zweckmäßig ein im Betrieb verstellbares Schluckvolumen auf.

Die Übersetzung oder das Verhältnis der Drehzahl einer Hinterachse des Kraftfahrzeugs zu der Drehzahl der Pumpe ist vorzugsweise gleichbleibend, wenn der hydrostatische Hilfsantrieb aktiviert ist. Bei der Konstant-Pumpe ist somit das Verhältnis von Drehzahl zu Fördervolumen zweckmäßig konstant. Bei einer Ausführung mit Verstell-Pumpe kann das Verhältnis von Drehzahl zu Fördervolumen verändert werden.

Zu erwähnen ist, dass im Rahmen der Erfindung die Schutzkonfiguration zweckmäßig nicht nur zum Schutz zumindest einer Funktionseinrichtung (z.B. der Hilfsantrieb) dient, sondern letztendlich zum Schutz des vorzugsweise gesamten von der Pumpe mit Arbeitsfluid (z.B. Öl) versorgten Teils des Hydrauliksystems (z.B. das vom Arbeitsfluid durchströmte Leitungssystem, Ventile, Filter, Speisepumpe, Steuereinheit, etc.).

Zu erwähnen ist ferner, dass die Schutzkonfiguration insbesondere als Kurzschluss-Schaltung oder Zwangstrennung wirkt. Dadurch kann die Pumpe in Bezug auf ihren zumindest einen Verbraucher (Funktionseinrichtung) bzw. ihren zumindest einen zu versorgenden hydraulischen Kreislauf in einen Leerlauf-Zustand versetzt werden.

Zu erwähnen ist außerdem, dass die Schutzkonfiguration vorzugsweise eine Schutzeinrichtung ist, die z.B. insbesondere die Erfassungseinheit, die zweckmäßig hydraulische Steuereinheit (z.B. Ventilblock), die elektronische Steuereinheit und/oder das Schalt- oder Steuerelement umfasst. Die Schutzkonfiguration kann auch rein hydro-mechanisch realisiert werden.

Zu erwähnen ist, dass vorzugsweise die Schutzkonfiguration die Pumpe oder das Hydrauliksystem mittelbar oder unmittelbar stromabwärts der Pumpe zweckmäßig fluidisch beeinflussen kann oder zumindest teilweise in die Pumpe oder in das Hydrauliksystem mittelbar oder unmittelbar stromabwärts der Pumpe eingekoppelt sein kann (z.B. mittels eines Schutzventils, einer Schutzkupplung, einer Zwangstrennung, etc.), um ihren Zweck zu erfüllen.

Zu erwähnen ist des Weiteren, dass im Rahmen der Erfindung nicht nur Ausführungsformen umfasst sind, in denen zumindest eine Funktionseinrichtung quasi indirekt über die zweckmäßig hydraulische Steuereinheit deaktiviert, im deaktivierten Zustand blockiert und/oder von der Pumpe entkoppelt wird, sondern vorzugsweise auch Ausführungsformen, in denen die Schutzkonfiguration quasi direkt auf zumindest eine Funktionseinrichtung wirkt, um sie zu deaktivieren, im deaktiviertem Zustand zu blockieren und/oder von der Pumpe zu entkoppeln.

Die Erfindung ist nicht auf ein Hydrauliksystem beschränkt, sondern umfasst auch ein Kraftfahrzeug, insbesondere ein Nutzfahrzeug, z.B. einen Lastkraftwagen oder einen Omnibus, mit einem Hydrauliksystem wie hierin beschrieben.

Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Fig. 1: zeigt einen Schaltplan eines Hydrauliksystems gemäß einer Ausführungsform der Erfindung und
- Fig. 2: zeigt einen Schaltplan eines Hydrauliksystems gemäß einer anderen Ausführungsform der Erfindung.

Die in den Figuren gezeigten Ausführungsformen stimmen teilweise überein, wobei ähnliche oder identische Teile mit den gleichen Bezugszeichen versehen sind, und zu deren Erläuterung auch auf die Beschreibung der anderen Ausführungsform verwiesen wird, um Wiederholungen zu vermeiden.

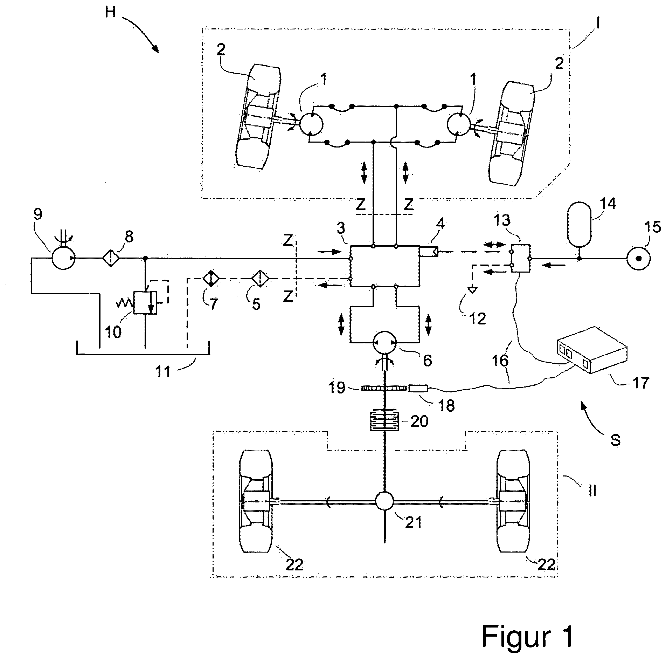

Figur 1 zeigt eine schematische Darstellung eines Hydrauliksystems H für ein Kraftfahrzeug, insbesondere ein Nutzfahrzeug, gemäß einer Ausführungsform der Erfindung.

Das Hydrauliksystem H umfasst einen Vorderachsaufbau I des Kraftfahrzeugs. Der Vorderachsaufbau I umfasst eine lenkbare Achse mit Radeinheiten 2 und umkehrbaren Hydraulikmotoren 1 für die Radeinheiten 2. Die Hydraulikmotoren 1 sind als sogenannte Einzelradmotoren ausgeführt und können insbesondere als Anfahrhilfe und/oder Bremshilfe dienen.

Figur 1 zeigt ferner einen mechanisch antreibbaren Hinterachsaufbau II. Der Hinterachsaufbau II umfasst ein Differenzial bzw. Getriebe mit Antriebswelle 21 und Radeinheiten 22.

Figur 1 zeigt des Weiteren eine Kupplung 20, über die der Hinterachsaufbau II mit der weiter unten beschriebenen hydrostatischen Einrichtung, insbesondere einer hydraulischen Pumpe 6 verbindbar ist. Die Kupplung 20 kann dabei an der Abtriebsseite des Schaltgetriebes, dem Hinterachsaufbau II oder im Antriebsstrang zwischen Schaltgetriebe 20 und Hinterachsaufbau II angebracht sein.

Das Hydrauliksystem H umfasst ferner eine hydrostatische Einrichtung, die zwischen den Vorderachsaufbau I und den Hinterachsaufbau II geschaltet ist. Die hydrostatische Einrichtung umfasst eine Steuereinheit 3, insbesondere einen Ventilblock, mit einem oder mehreren hydraulischen Steuer- und/oder Regelventilen, eine zweckmäßig pneumatisch betätigbare Vorsteuereinheit 4 und eine hydraulische Pumpe 6 (Pumpeneinrichtung), die umkehrbar und als Konstantpumpe mit im Betrieb konstantem Verdrängervolumen ausgeführt ist. Die Pumpe 6 dient mitunter dazu, die Hydraulikmotoren 1 fluidisch mittels eines Arbeitsfluids (z.B. Öl) anzutreiben. Im Umkehrbetrieb, d. h. bei einem Bremsvorgang können die Hydraulikmotoren 1 als Pumpen und die Konstantpumpe 6 als hydraulischer Motor betrieben werden.

An die hydrostatische Einrichtung ist nicht nur der Vorderachsaufbau I und der Hinterachsaufbau II angeschlossen, sondern optional auch weitere, zweckmäßig in zumindest einem zusätzlichen hydraulischen Kreislauf aufgenommene Funktionseinrichtungen, z.B. ein Rücklauffilter 5, ein Wärmetauscher bzw. eine Kühleinrichtung 7, ein Niederdruckfilter 8, eine Speisepumpe 9 (insbesondere bei geschlossenem Hauptkreis erforderlich), ein Druckbegrenzungsventil 10 und ein Ölbehälter 11.

Ferner ist die hydrostatische Einrichtung, insbesondere die Pumpe 6 mit einer Schutzkonfiguration S, insbesondere einer Schutzeinrichtung ausgestattet, die dazu dient, die Hydraulikmotoren 1 vor den Auswirkungen eines Schadens an oder in der Pumpe 6 (Pumpeneinrichtung) zu schützen und zwar vor unerwünschter Partikelkontamination, insbesondere unerwünschtem Partikeleintrag, die durch einen Schaden an oder in der Pumpe 6 verursacht werden könnte, nämlich dann, wenn im Pumpen-Schadensfall Partikel (z.B. Bruchteile, Kleinteile, etc.) von der Pumpe 6 in das mit der Pumpe 6 fluidisch verbundene Leitungssystem gelangen. Die Partikel können insbesondere zu einer Beschädigung oder gar Zerstörung der Hydraulikmotoren 1 führen, zu einer Verstopfung oder zumindest Strömungsquerschnittsreduzierung führen, etc.. Die Pumpe 6 wird insbesondere dann beschädigt, wenn sie mit einer unzulässigen Überdrehzahl betrieben wird.

Die Schutzeinrichtung S umfasst insbesondere eine Erfassungseinheit 18, 19 zur Erfassung der Drehzahl der Pumpe 6, eine elektronische Steuereinheit 17 zum Durchführen eines Vergleichs zwischen der erfassten Drehzahl der Pumpe 6 und einer Grenzdrehzahl und ein mittels der Steuereinheit 17 ansteuerbares, mit der Vorsteuereinheit 4 wirkverbundenes Schalt- oder Steuerelement 13 (z.B. ein pneumatisches Steuerventil). Ferner kann die Schutzeinrichtung S optional einen Druckspeicher 14, eine Druckquelle 15 und eine Entlüftung 12 aufweisen.

Die Erfassungseinheit 18, 19 weist einen an der Pumpenwelle der Pumpe 6 montierten Drehzahlsignalgeber 19 auf und ein elektronisches Sensorelement 18, das zur Erfassung der von dem Drehzahlsignalgeber kommenden Signale dient. Die Steuereinheit 17 ist über elektrische Signalleitungen 16 einerseits mit dem Sensorelement 18 verbunden und andererseits mit dem Schalt- oder Steuerelement 13 verbunden.

Die Schutzeinrichtung S sorgt dafür, dass die Hydraulikmotoren 1 mittels der Steuereinheit 3 von der Pumpe 6 fluidisch entkoppelt werden, was in der Figur 1 stark schematisch durch die waagrechte Strichellinie Z-Z angedeutet ist, wenn die Drehzahl der Pumpe 6 eine Grenzdrehzahl erreicht oder überschreitet. Dadurch kann die Fluidverbindung zwischen der Pumpe 6 und den Hydraulikmotoren 1 im Pumpen-Schadensfall getrennt werden und die Hydraulikmotoren 1 somit quasi deaktiviert oder in einem deaktivierten Zustand gesperrt werden. Das ggf. partikelverunreinigte Arbeitsfluid kann somit nicht zu den Hydraulikmotoren 1 strömen, sondern zirkuliert z.B. innerhalb der Steuereinheit 3 selbst. Die Pumpe 6 ist dann in Bezug auf seine Verbraucher und hydraulischen Hilfskreise in einen Leerlauf-Zustand versetzt. Die Schutzeinrichtung S schafft somit mittels der Steuereinheit 3 eine Kurzschluss-Schaltung oder Zwangstrennung. Der Hauptteil des Hydrauliksystems H, insbesondere das Leitungssystem zwischen der Steuereinheit 3 und den Hydraulikmotoren 1 und die Hydraulikmotoren 1 selbst werden durch die Zwangsentkopplung von der Pumpe 6 fluidisch isoliert und somit vor einer möglichen Partikelkontamination zumindest weitgehendst verschont. Folglich können die Instandsetzungskosten auf die Pumpe 6 beschränkt und somit erheblich reduziert werden. Das Risiko von Folgeschäden ist deutlich minimiert.

Die Erfassungseinheit 17, 18 ist so konfiguriert, dass sie die Drehzahl der Pumpe kontinuierlich erfasst und kontinuierlich an die Steuereinheit 17 kommuniziert. Bei Überschreitung einer Grenzdrehzahl wird ein Signal mit übergeordneter Priorität an die Steuereinheit 17 gegeben. Die Steuereinheit 17 wirkt daraufhin pneumatisch auf die Vorsteuereinheit 4 ein und die Vorsteuereinheit 4 sorgt für die zuvor erwähnte Entkopplung zwischen der Pumpe 6 (Pumpeneinrichtung) und den Hydraulikmotoren 1.

Sofern die Hydraulikmotoren 1 deaktiviert sind, im deaktivierten Zustand blockiert werden und/oder von der Pumpe 6 entkoppelt sind, wird eine dazugehörige Fehlermeldung im Steuersystem des Kraftfahrzeugs hinterlegt. Der Fahrzeugführer erhält zudem eine entsprechende Meldung über ein Fahrzeugdisplay oder einen Fahrzeuglautsprecher z.B. mit dem zusätzlichen Hinweis, eine Service-Werkstatt aufzusuchen. Die Service-Werkstatt kann den Fehlercode auslesen und gezielt betroffene Funktionseinrichtungen inspizieren und ggf. ersetzen. Nach erfolgter Reparatur kann die Service-Werkstatt die Hydraulikmotoren 1 wieder entsperren.

Zu erwähnen ist, dass es im Rahmen der Erfindung möglich ist, dass die Schutzeinrichtung S zusätzlich dazu dienen kann, die mit den Bezugszeichen 3, 4, 5, 7, 8, 9, 10 und 11 versehenen Funktionseinrichtungen vor den Auswirkungen eines Schadens an oder in der Pumpe 6 zu schützen, was stark schematisch durch die in Figur 1 vertikale Strichellinie Z-Z angedeutet ist. Die zuvor unter Bezugnahme auf die Hydraulikmotoren 1 gemachte Beschreibung gilt somit entsprechend für die mit den Bezugszeichen 3, 4, 5, 7, 8, 9, 10 und 11 versehenen Funktionseinrichtungen. Die zumindest eine Funktionseinrichtung kann somit einen den Hilfsantrieb 1 umfassenden Kreislauf und optional zumindest einen zusätzlichen Kreislauf mit den mit den Bezugszeichen 3, 4, 5, 7, 8, 9, 10 und 11 versehenen Bauteile umfassen.

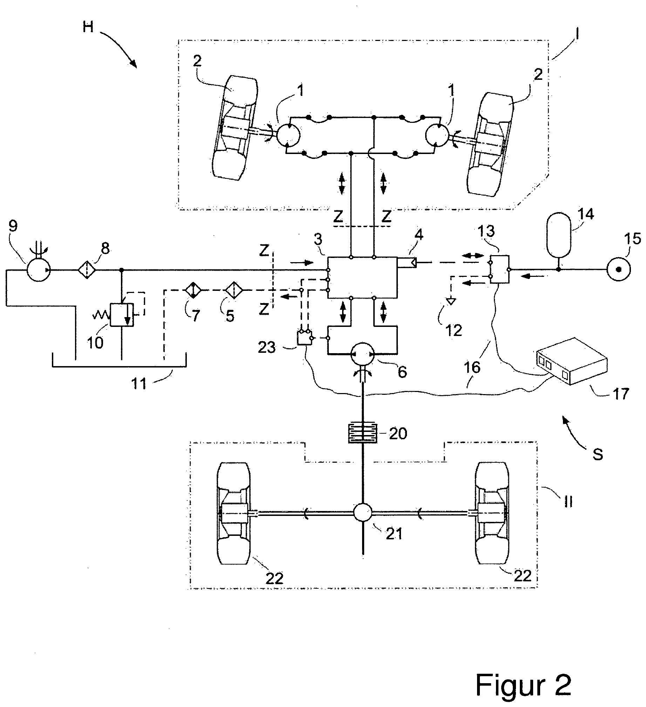

In Figur 2 ist eine Abwandlung obiger Ausführungsform dargestellt. Anstelle einer Drehzahlerfassungseinrichtung werden strömungsspezifische Kenngrößen des der Pumpe 6 nachgeschalteten Teils des Hydraulikkreislaufs H, insbesondere des Hauptkreislaufs als Eingangsgrößen für die Schutzkonfiguration S herangezogen. Diese Kenngrößen sind z.B. ein Druck, Druckgradient und/oder ein Volumenstrom, die Rückschlüsse auf die Drehzahl der Pumpe 6 erlauben. Im Rahmen der Erfindung muss die Drehzahl der Pumpe 6 somit nicht unbedingt quasi direkt erfasst werden, sondern kann auch quasi indirekt über letztgenannte Möglichkeiten hergeleitet werden. Erfasst werden die Werte durch eine Steuer- und/oder Erfassungsvorrichtung 23. Werden ein oder mehrere Grenzwerte überschritten, wird ein Signal an die elektronische Steuereinheit 17 übertragen, woraufhin die elektronische Steuereinheit 17 dafür sorgt, dass mindestens eine Funktionseinrichtung deaktiviert, im deaktivierten Status blockiert und/oder von der Pumpe 6 getrennt wird. Alternativ dazu ist auch denkbar, dass die Steuer-/Erfassungsvorrichtung 23 als Aktuator agiert und hydromechanisch mindestens eine Funktionseinrichtung quasi direkt deaktiviert, in deaktiviertem Zustand blockiert und/oder von der Pumpe 6 trennt.

### Bezugszeichenliste

- 1: Hilfsantrieb, insbesondere Hydraulikmotor(en), umkehrbar
- 2: Radeinheit, lenkbar
- 3: Steuereinheit (Ventilblock) mit hydraulischen Steuer- und Regelventilen
- 4: Vorsteuereinheit, pneumatisch betätigbar
- 5: Rücklauffilter
- 6: Hydraulische Pumpe (Pumpeneinrichtung), umkehrbar
- 7: Wärmetauscher bzw. Kühler
- 8: Niederdruckfilter
- 9: Speisepumpe (bei geschlossenem Hauptkreis notwendig)
- 10: Druckbegrenzungsventil
- 11: Ölbehälter
- 12: Entlüftung
- 13: Steuerventil, pneumatisch
- 14: Druckspeicher (optional)
- 15: Druckquelle, pneumatisch
- 16: Signalleitung, elektrisch
- 17: Steuereinheit
- 18: Sensorelement, elektronisch
- 19: Drehzahlsignalgeber
- 20: Kupplung
- 21: Differential bzw. Gebtriebe mit Antriebswelle
- 22: Radeinheit
- 23: Steuervorrichtung, zweckmäßig mit elektronischem Sensorelement bzw. hydraulisch-mechanischer Rückkopplung
- H: Hydrauliksystem
- S: Schutzkonfiguration/Schutzeinrichtung
- I: Lenkbare Achse mit hydrostatischem Hilfsantrieb (zweckmäßig vorne)
- II: Mechanisch angetriebene Achse (zweckmäßig hinten)
- Z-Z: Fluidische Trennung

## Patentansprüche

1. Hydrauliksystem (H) für ein Kraftfahrzeug, insbesondere Nutzfahrzeug, mit einer Pumpe (6) und zumindest einer Funktionseinrichtung (1, 3, 4, 5, 7, 8, 9, 10, 11), die mit der Pumpe (6) fluidisch verbunden ist, wobei das Hydrauliksystem (H) eine Schutzkonfiguration (S) aufweist, die dazu dient, die Funktionseinrichtung (1, 3, 4, 5, 7, 8, 9, 10, 11) vor der Auswirkung eines Schadens an und/oder in der Pumpe (6) zu schützen, **dadurch gekennzeichnet, dass** die Schutzkonfiguration (S) dafür sorgt, dass die Funktionseinrichtung (1, 3, 4, 5, 7, 8, 9, 10, 11) deaktiviert wird, im deaktivierten Zustand blockiert wird und/oder von der Pumpe (6) entkoppelt wird, wenn ein vorbestimmtes Sicherheitskriterium erfüllt wird und das Sicherheitskriterium umfasst, dass die Drehzahl der Pumpe (6) eine Grenzdrehzahl erreicht oder überschreitet.

2. Hydrauliksystem (H) nach Anspruch 1, **dadurch gekennzeichnet, dass** die Schutzkonfiguration (S) eine Erfassungseinheit (18, 19) zur Erfassung der Drehzahl der Pumpe (6) und eine elektronische Steuereinheit (17) zum Durchführen eines Vergleichs zwischen der erfassten Drehzahl und einer Grenzdrehzahl aufweist.

3. Hydrauliksystem (H) nach Anspruch 2, **dadurch gekennzeichnet, dass** die Erfassungseinheit (17, 18) die Drehzahl der Pumpe (6) an der Pumpenwelle erfasst und/oder zumindest teilweise an der Pumpenwelle montiert ist.

4. Hydrauliksystem (H) nach Anspruch 2 oder 3, **dadurch gekennzeichnet, dass** die Erfassungseinheit (17, 18) ausgeführt ist, die Drehzahl der Pumpe (6) kontinuierlich zu erfassen und vorzugsweise kontinuierlich an die Steuereinheit (17) zu kommunizieren.

5. Hydrauliksystem (H) nach einem der vorhergehenden Ansprüche, **dadurch gekennzeichnet, dass** die Schutzkonfiguration (S) eine Erfassungs- und/oder Steuervorrichtung (23) umfasst, die dazu dient, einen Druck, Druckgradienten und/oder Volumenstrom stromabwärts der Pumpe (6) zu erfassen, um zweckmäßig auf eine Drehzahl der Pumpe (6) schließen zu können.

6. Hydrauliksystem (H) nach Anspruch 5, **dadurch gekennzeichnet, dass** der Druck, der Druckgradient und/oder der Volumenstrom mechanisch und/oder elektronisch erfasst werden.

7. Hydrauliksystem (H) nach einem der Ansprüche 1 bis 6, **dadurch gekennzeichnet, dass** die Schutzkonfiguration (S) so ausgeführt ist, dass sie nach Erfüllung des Sicherheitskriteriums auf eine vorzugsweise hydraulische Steuereinheit (3) wirkt und die Steuereinheit (3) so ausgeführt ist, dass sie Funktionseinrichtung (1, 3, 4, 5, 7, 8, 9, 10, 11) deaktiviert, im deaktivierten Zustand blockiert und/oder von der Pumpe (6) entkoppelt.

8. Hydrauliksystem (H) nach Anspruch 7, **dadurch gekennzeichnet, dass** die Schutzkonfiguration (S) nach Erfüllung des Sicherheitskriteriums ein elektrisches Signal an eine elektronische Steuereinheit (17) leitet, und die elektronische Steuereinheit (17) so ausgeführt ist, dass sie über ein vorzugsweise pneumatisches Steuerventil (13) und/oder eine vorzugsweise pneumatisch betätigbare Vorsteuereinheit (4) auf die Steuereinheit (3) wirkt.

9. Hydrauliksystem (H) nach Anspruch 7 oder 8, **dadurch gekennzeichnet, dass** die Steuereinheit (3) ein Ventilblock mit einem oder mehreren Ventilen ist und/oder stromabwärts der Pumpe (6) angeordnet ist.

10. Hydrauliksystem (H) nach Anspruch 8 oder 9, **dadurch gekennzeichnet, dass** die Schutzkonfiguration (S) ein Schalt- oder Steuerelement (13) aufweist, das mittels der Steuereinheit (17) ansteuerbar ist und mit der Funktionseinrichtung (1, 3, 4, 5, 7, 8, 9, 10, 11) wirkverbunden ist, vorzugsweise pneumatisch.

11. Hydrauliksystem (H) nach einem der vorhergehenden Ansprüche, **dadurch gekennzeichnet, dass** die Funktionseinrichtung einen Hilfsantrieb (1) für das Kraftfahrzeug umfasst, vorzugsweise für eine Vorderachse, Nachlaufachse und/oder Vorlaufachse des Kraftfahrzeugs.

12. Hydrauliksystem (H) nach Anspruch 11, **dadurch gekennzeichnet, dass** der Hilfsantrieb (1)
- Einzelradmotoren umfasst oder
- so ausgeführt ist, dass er über eine mechanische Antriebswelle zumindest zwei Fahrzeugräder antreibt.

13. Hydrauliksystem (H) nach einem der vorhergehenden Ansprüche, **dadurch gekennzeichnet, dass** die zumindest eine Funktionseinrichtung zumindest eines von folgenden umfasst:
- eine Hilfs- oder Speisepumpe (9),
- einen Druck- und/oder Rücklauffilter (8, 5),
- eine hydraulische Sicherungseinrichtung (10),
- einen Ölbehälter (11),
- einen Wärmetauscher und/oder eine Kühleinrichtung (7),
- einen oder mehrere hydraulische Kreisläufe,
- eine Steuereinheit (3),
- eine Vorsteuereinheit (4).

14. Hydrauliksystem (H) nach einem der vorhergehenden Ansprüche, **dadurch gekennzeichnet, dass** die Schutzkonfiguration (S) ausgeführt ist, eine Information an eine Mitteilungseinheit des Kraftfahrzeugs zu senden und die Mitteilungseinheit ausgeführt ist, den Fahrer des Kraftfahrzeugs darüber zu informieren, dass die Funktionseinrichtung (1, 3, 4, 5, 7, 8, 9, 10, 11) deaktiviert ist, im deaktivierten Zustand blockiert wird und/oder von der Pumpe (6) entkoppelt ist.

15. Hydrauliksystem (H) nach einem der vorhergehenden Ansprüche, **dadurch gekennzeichnet, dass** die Pumpe (6) als Konstant-Pumpe ausgeführt ist, zweckmäßig mit oder ohne manuell adaptierbarem Schluckvolumen.

16. Hydrauliksystem (H) nach einem der Ansprüche 1 bis 14, **dadurch gekennzeichnet, dass** die Pumpe (6) als Verstell-Pumpe ausgeführt ist.

17. Hydrauliksystem (H) nach einem der Ansprüche 11 bis 16, **dadurch gekennzeichnet, dass** die Übersetzung oder das Verhältnis der Drehzahl einer Hinterachse des Kraftfahrzeugs zu der Drehzahl der Pumpe (6) gleichbleibend ist, wenn der Hilfsantrieb (1) aktiviert ist.

18. Kraftfahrzeug, vorzugsweise Nutzfahrzeug, mit einem Hydrauliksystem (H) nach einem der vorhergehenden Ansprüche.

## Claims

1. A hydraulic system (H) for a motor vehicle, in particular commercial vehicle, with a pump (6) and at least one functional device (1, 3, 4, 5, 7, 8, 9, 10, 11), which is fluidically connected to the pump (6), wherein the hydraulic system (H) has a protective configuration (S) which serves to protect the functional device (1, 3, 4, 5, 7, 8, 9, 10, 11) from the effect of damage to and/or in the pump (6), **characterized in that** the protective configuration (S) ensures that the functional device (1, 3, 4, 5, 7, 8, 9, 10, 11) is deactivated, is blocked in the deactivated state and/or is decoupled from the pump (6) when a predefined safety criterion is met, and the safety criterion comprises the rotational speed of the pump (6) reaching or exceeding a rotational speed limit.

2. The hydraulic system (H) according to Claim 1, **characterized in that** the protective configuration (S) has a detection unit (18, 19) for detecting the rotational speed of the pump (6) and an electronic control unit (17) for carrying out a comparison between the detected rotational speed and a rotational speed limit.

3. The hydraulic system (H) according to Claim 2, **characterized in that** the detection unit (17, 18) detects the rotational speed of the pump (6) at the pump shaft and/or is at least partially mounted on the pump shaft.

4. The hydraulic system (H) according to Claim 2 or 3, **characterized in that** the detection unit (17, 18) is designed to continuously detect the rotational speed of the pump (6) and to communicate it preferably continuously to the control unit (17).

5. The hydraulic system (H) according to one of the preceding claims, **characterized in that** the protective configuration (S) comprises a detection and/or control device (23) which serves to detect a pressure, pressure gradient and/or volumetric flow downstream of the pump (6) in order to be able expediently to draw a conclusion about a rotational speed of the pump (6).

6. The hydraulic system (H) according to Claim 5, **characterized in that** the pressure, the pressure gradient and/or the volumetric flow are detected mechanically and/or electronically.

7. The hydraulic system (H) according to one of Claims 1 to 6, **characterized in that** the protective configuration (S) is designed in such a manner that, after meeting the safety criterion, it acts on a preferably hydraulic control unit (3), and the control unit (3) is designed in such a manner that it deactivates the functional device (1, 3, 4, 5, 7, 8, 9, 10, 11), blocks same in the deactivated state and/or decouples same from the pump (6).

8. The hydraulic system (H) according to Claim 7, **characterized in that**, after meeting the safety criterion, the protective configuration (S) directs an electric signal to an electronic control unit (17), and the electronic control unit (17) is designed in such a manner that it acts on the control unit (3) via a preferably pneumatic control valve (13) and/or a preferably pneumatically actuable pilot control unit (4).

9. The hydraulic system (H) according to Claim 7 or 8, **characterized in that** the control unit (3) is a valve block with one or more valves and/or is arranged downstream of the pump (6).

10. The hydraulic system (H) according to Claim 8 or 9, **characterized in that** the protective configuration (S) has a switching or control element (13) which is activatable by means of the control unit (17) and is operatively connected, preferably pneumatically, to the functional device (1, 3, 4, 5, 7, 8, 9, 10, 11) .

11. The hydraulic system (H) according to one of the preceding claims, **characterized in that** the functional device comprises an auxiliary drive (1) for the motor vehicle, preferably for a front axle, a trailing axle and/or a leading axle of the motor vehicle.

12. The hydraulic system (H) according to Claim 11, **characterized in that** the auxiliary drive (1)
- comprises one-wheel drives or
- is designed in such a manner that it drives at least two vehicle wheels via a mechanical drive shaft.

13. The hydraulic system (H) according to one of the preceding claims, **characterized in that** the at least one functional device comprises at least one of the following:
- an auxiliary or feed pump (9),
- a pressure and/or return filter (8, 5),
- a hydraulic protection device (10),
- an oil tank (11),
- a heat exchanger and/or a cooling device (7),
- one or more hydraulic circuits,
- a control unit (3),
- a pilot control unit (4).

14. The hydraulic system (H) according to one of the preceding claims, **characterized in that** the protective configuration (S) is designed to transmit information to a communication unit of the motor vehicle, and the communication unit is designed to inform the driver of the motor vehicle that the functional device (1, 3, 4, 5, 7, 8, 9, 10, 11) is deactivated, is blocked in the deactivated state and/or is decoupled from the pump (6).

15. The hydraulic system (H) according to one of the preceding claims, **characterized in that** the pump (6) is designed as a constant pump, expediently with or without a manually adjustable displacement volume.

16. The hydraulic system (H) according to one of Claims 1 to 14, **characterized in that** the pump (6) is designed as a variable displacement pump.

17. The hydraulic system (H) according to one of Claims 11 to 16, **characterized in that** the transmission ratio of the ratio of the rotational speed of a rear axle or the motor vehicle to the rotational speed of the pump (6) is constant if the auxiliary drive (1) is activated.

18. A motor vehicle, preferably commercial vehicle, with a hydraulic system (H) according to one of the preceding claims.

## Revendications

1. Système hydraulique (H) pour un véhicule à moteur, en particulier véhicule utilitaire, doté d'une pompe (6) et d'au moins un dispositif opérationnel (1, 3, 4, 5, 7, 8, 9, 10, 11), lequel est raccordé fluidiquement à la pompe (6), le système hydraulique (H) comportant une configuration de protection (S) servant à protéger le dispositif opérationnel (1, 3, 4, 5, 7, 8, 9, 10, 11) avant qu'un dommage ne soit causé sur et/ou dans la pompe (6), **caractérisé en ce que** la configuration de protection (S) garantit que le dispositif opérationnel (1, 3, 4, 5, 7, 8, 9, 10, 11) est désactivé, est bloqué dans l'état désactivé et/ou est désaccouplé de la pompe (6), lorsqu'un critère de sécurité prédéterminé est rempli et le critère de sécurité inclut que le régime de la pompe (6) atteint ou dépasse une vitesse limite de rotation.

2. Système hydraulique (H) d'après la revendication 1, **caractérisé en ce que** la configuration de protection (S) comporte une unité de saisie (18, 19) destinée à saisir le régime de la pompe (6) et une unité de commande électronique (17) destinée à effectuer une comparaison entre le régime saisi et un régime limite.

3. Système hydraulique (H) d'après la revendication 2, **caractérisé en ce que** l'unité de saisie (17, 18) saisit le régime de la pompe (6) sur l'arbre de pompe et/ou est montée au moins partiellement sur l'arbre de pompe.

4. Système hydraulique (H) d'après la revendication 2 ou 3, **caractérisé en ce que** l'unité de saisie (17, 18) est réalisée pour saisir en continu le régime de la pompe (6) et pour le communiquer de préférence en continu à l'unité de commande (17).

5. Système hydraulique (H) d'après l'une des revendications précédentes, **caractérisé en ce que** la configuration de protection (S) comprend un appareil de saisie et/ou de commande (23), servant à saisir une pression, des gradients de pression et/ou un débit volumique en aval de la pompe (6), pour conclure fonctionnellement à un régime de la pompe (6).

6. Système hydraulique (H) d'après la revendication 5, **caractérisé en ce que** la pression, le gradient de pression et/ou le débit volumique sont saisis de manière mécanique et/ou électronique.

7. Système hydraulique (H) d'après l'une des revendications 1 à 6, **caractérisé en ce que** la configuration de protection (S) est réalisée de façon à opérer sur une unité de commande (3) de préférence hydraulique après que la condition du critère de sécurité a été remplie et l'unité de commande (3) est réalisée de façon à désactiver le dispositif opérationnel (1, 3, 4, 5, 7, 8, 9, 10, 11), le bloquer dans l'état désactivé et/ou le désaccoupler de la pompe (6).

8. Système hydraulique (H) d'après la revendication 7, **caractérisé en ce que** la configuration de protection (S) conduit un signal électrique à une unité de commande électronique (17) après que la condition du critère de sécurité a été remplie, et l'unité de commande électronique (17) est réalisée de façon à opérer sur l'unité de commande (3) par le biais d'une vanne de commande (13) de préférence pneumatique et/ou d'une unité de pilotage (4) de préférence pneumatiquement actionnable.

9. Système hydraulique (H) d'après la revendication 7 ou 8, **caractérisé en ce que** l'unité de commande (3) est un bloc de vannes doté d'une ou plusieurs vannes et/ou est agencé en aval de la pompe (6).

10. Système hydraulique (H) d'après la revendication 8 ou 9, **caractérisé en ce que** la configuration de protection (S) comporte un élément de commutation ou de commande (13), lequel est commandable au moyen de l'unité de commande (17) et est raccordé de manière opérante au dispositif opérationnel (1, 3, 4, 5, 7, 8, 9, 10, 11), de préférence pneumatiquement.

11. Système hydraulique (H) d'après l'une des revendications précédentes, **caractérisé en ce que** le dispositif opérationnel comprend un entraînement auxiliaire (1) pour le véhicule à moteur, de préférence pour un essieu avant, un essieu suiveur et/ou un essieu porteur du véhicule à moteur.

12. Système hydraulique (H) d'après la revendication 11, **caractérisé en ce que** l'entraînement auxiliaire (1)
- comprend des moteurs de roue individuels ou
- est réalisé de sorte qu'il entraîne au moins deux roues de véhicule par le biais d'un arbre d'entraînement mécanique.

13. Système hydraulique (H) d'après l'une des revendications précédentes, **caractérisé en ce que** l'au moins un dispositif opérationnel comprend au moins un de ce qui suit :
- une pompe auxiliaire ou d'alimentation (9),
- un filtre retour et/ou de pression (8, 5),
- un moyen d'arrêt hydraulique (10),
- un réservoir d'huile (11),
- un échangeur de chaleur et/ou un dispositif de refroidissement (7),
- un ou plusieurs circuits hydrauliques,
- une unité de commande (3),
- une unité de pilotage (4).

14. Système hydraulique (H) d'après l'une des revendications précédentes, **caractérisé en ce que** la configuration de protection (S) est réalisée pour envoyer une information à une unité de message du véhicule à moteur et l'unité de message est réalisée pour informer le conducteur du véhicule à moteur que le dispositif opérationnel (1, 3, 4, 5, 7, 8, 9, 10, 11) est désactivé, est bloqué dans l'état désactivé et/ou est désaccouplé de la pompe (6).

15. Système hydraulique (H) d'après l'une des revendications précédentes, **caractérisé en ce que** la pompe (6) est réalisée comme pompe constante, fonctionnellement avec ou sans volume absorbé manuellement adaptable.

16. Système hydraulique (H) d'après l'une des revendications 1 à 14, **caractérisé en ce que** la pompe (6) est réalisée comme pompe à déplacement.

17. Système hydraulique (H) d'après l'une des revendications 11 à 16, **caractérisé en ce que** le rapport de transmission ou le rapport du régime d'un essieu arrière du véhicule à moteur au régime de la pompe (6) reste identique lorsque l'entraînement auxiliaire (1) est activé.

18. Véhicule à moteur, en particulier véhicule utilitaire, doté d'un système hydraulique (H) d'après l'une des revendications précédentes.
